# EUROPÄISCHE PATENTANMELDUNG

(11) **EP 1 901 013 A2**
(43) Veröffentlichungstag der Anmeldung: **19.03.2008**
(21) Anmeldenummer: 07014848.1
(22) Anmeldetag: 28.07.2007
(51) Int. Cl.: F24J 2/46

(54) **Solarkollektor, Solarkollektoranordnung und Anschlussverschraubung hierfür**

(30) Priorität: 13.09.2006 DE 202006013988 U
(71) Anmelder: Witzenmann GmbH, 75175 Pforzheim (DE)
(72) Erfinder: Abraham, Christoph, 75180 Pforzheim (DE); Gehring, Matthias, 75334 Straubenhardt (DE)
(74) Vertreter: Blumenröhr, Dietrich

(57) **Zusammenfassung**

Die Erfindung betrifft einen Solarkollektor nebst einer Solarkollektoranordnung und einer Anschlussverschraubung hierfür. Die rohr- oder schlauchförmigen Leitungselemente des Solarkollektors weisen endständige und zum Anschluss an strömungsaufwärts- oder -abwärts benachbart angeordnete Leitungselemente dienende Anschlussenden auf, wobei an dem Anschlussende des Solarkollektors ein Balg angeschlossen ist. Die Erfindung zeichnet sich dadurch aus, dass das Anschlussende (1a, 2a) und der Balg (7) ineinandergesteckt sind und über eine Klemmringverschraubung (3, 4, 5, 6, 8, 9) aneinander festgelegt sind.

## Beschreibung

Die Erfindung betrifft einen Solarkollektor mit rohr- oder schlauchförmigen Leitungselementen, die endständige und zum Anschluss an strömungsaufwärts- oder -abwärts benachbart angeordnete Leitungselemente dienende Anschlussenden aufweisen, wobei an dem Anschlussende des Solarkollektors ein Balg angeschlossen ist. Des Weiteren betrifft die Erfindung eine Solarkollektoranordnung aus zwei oder mehreren derartigen Solarkollektoren und schließlich eine Anschlussverschraubung für einen Solarkollektor.

Üblicherweise bestehen Solarkollektoren aus einem Gehäuse mit einer darin angeordneten Kollektorplatte sowie mit der Kollektorplatte wärmeleitend verbundenen Kollektorleitungselementen, die wiederum zu Sammelleitungselementen führen, welche seitlich aus dem Gehäuse vorstehen, wobei durch die Kollektor- und die Sammelleitungselemente das zu erwärmende Medium zirkuliert. Üblicherweise werden mehrere solcher Solarkollektoren in Reihe geschaltet, um die Kollektorfläche zu vergrößern. Hierbei werden die Anschlussenden benachbarter Solarkollektoren in der Regel miteinander verschraubt. Eine solche Verschraubung für Solarkollektoren ist beispielsweise in der DE 20 2004 005 579.1 offenbart.

Aus der DE 202 09 222.4 ist es bekannt, an dem Anschlussende einen Kompensator bzw. Balg anzuordnen, um temperaturbedingte Längendehnungen und Montageungenauigkeiten ausgleichen zu können. Ein solcher Kompensator bzw. Balg ist dabei in der Lage, seine Länge um etwa 20 bis 30 % zu verändern und auch Radial- und Lateralbewegungen bzw. -abweichungen auszugleichen. Zum Festlegen an dem Anschlussende ist das dem Anschlussende zugewandte Ende des Kompensators auf- und umgebördelt und mit einem Anschlusselement mit Außengewinde versehen; auch das Anschlussende ist auf- und umgebördelt unter Ausbildung eines sich radial nach außen erstreckenden Umfangsrandes, der eine Überwurfmutter hält; unter Zwischenfügung eines Dichtrings werden so Überwurfmutter und Anschlusselement in Eingriff gebracht, und die beiden Bördelenden von Anschlussende und Kompensator- bzw. Balgende werden gegen den Dichtring gepresst. Eine solche Verbindung wird als flach dichtende Verschraubung bezeichnet.

Die Erfahrung auf dem Markt zeigt, dass mittlerweile aus optischen Gründen vom Kunden nur solche Verschraubungen akzeptiert werden, die es ermöglichen, zwei benachbarte Solarkollektoren mit minimalem Abstand nebeneinander anzuordnen; denn der optische Eindruck einer Solarkollektoranlage ist umso besser, je einheitlicher die Solarkollektoren aussehen bzw. je weniger eine durch die Verschraubungen bedingte Lücke zwischen zwei benachbarten Solarkollektoren erkennbar ist.

Der vorliegenden Erfindung liegt hiervon ausgehend die Aufgabe zugrunde, einen Solarkollektor der eingangs genannten Art zur Verfügung zu stellen, der sich durch eine gegenüber dem Stand der Technik verkürzte Baulänge auszeichnet und dennoch durch Verwendung eines Balgs bzw. Kompensators dazu in der Lage ist, Montageungenauigkeiten und temperaturbedingte Längenänderungen reversibel auszugleichen.

Diese Aufgabe wird erfindungsgemäß dadurch gelöst, dass Anschlussende und Balg ineinandergesteckt sind und über eine Klemmring-Verschraubung aneinander festgelegt sind. Durch das Ineinanderstecken von Anschlussende und Balg lässt sich die gesamte Bauteillänge der Anschlussverschraubung wesentlich reduzieren, indem sich beide Bauteile im ineinandergesteckten Bereich radial überlappen. Darüber hinaus kann man auf den im Stand der Technik erforderlichen Dichtring verzichten, erzielt durch Verwendung einer Klemmringverschraubung mit metallischer Abdichtung noch dazu eine bessere Dichtigkeit mit einer größeren Lebensdauer und verkürzt durch das Weglassen des axial zwischen die beiden Anschlussenden anzuordnenden Dichtrings die gesamte Bauteillänge weiter.

Es ist des Weiteren von Vorteil, wenn der Balg glattwandige, insbesondere zylindrische Balg-Anschlussenden aufweist und auf der radialen Außenseite der Balg-Anschlussenden als Teil der Klemmringverschraubung ein Anschlusselement mit Außengewinde angeordnet und über eine radiale, insbesondere konische Aufweitung des freien Endes des Balganschlussendes unverlierbar gehalten ist. Im Gegenzug dazu ist vorteilhafterweise auf dem Anschlussende des Solarkollektors als Teil der Klemmringverschraubung ein Klemmring und eine Überwurfmutter angeordnet.

Hierdurch lässt sich das Anschlussende des Solarkollektors in das Balganschlussende einstecken und so eine metallische Abdichtung zwischen Anschlussende des Leitungselements und Klemmring einerseits sowie zwischen Klemmring und aufgeweitetem Ende des Balganschlussendes andererseits herstellen. Denn beim Anziehen der Klemmringverschraubung drückt die Überwurfmutter den Klemmring in das aufgeweitete Ende des Balganschlussendes, das Balganschlussende fungiert hierauf als Widerlager und sorgt dafür, dass der Klemmring in Radialrichtung nach innen auf das Anschlussende des Leitungselements gedrückt und so reib- und/oder formschlüssig am Anschlussende des Leitungselements festgelegt wird.

Das Balganschlussende ist dadurch in die an sich bekannte Klemmringverschraubung einbezogen und ist hierzu in seiner Form an das Anschlusselement mit Außengewinde angepasst, indem es in der für Klemmringverschraubungen üblichen Weise ebenfalls eine konische Flanke für die Beaufschlagung durch den Klemmring aufweist, um den Klemmring beim Anziehen der Überwurfmutter in Radialrichtung nach innen zu drücken. Durch die geringe Wandstärke des Balges lassen sich handelsübliche Klemmringverschraubungen unverändert beim vorliegenden Solarkollektor verwenden, ohne dass hierdurch die Funktion beeinträchtigt wäre.

Indem man die im Stand der Technik bekannte flach dichtende Verschraubung mit Dichtring erfindungsgemäß durch die Klemmringverschraubung ersetzt, werden die beim Stand der Technik vorhandenen zwei Abdichtungsbereiche beidseits des Dichtrings auf einen gemeinsamen Axialbereich verschmolzen, in welchem der Klemmring auf seiner radialen Außenseite gegen das konisch aufgeweitete Anschlussende des Balgs und auf seiner radialen Innenseite gegen das Anschlussende des Leitungselements drückt.

Eine weitere Verkürzung der Gesamtlänge der Verschraubung lässt sich dadurch erzielen, dass sich nicht nur das Anschlussende des Solarkollektors und der Balg mit seinem Balganschlussende radial überlappen, sondern dass ein am Balg festgelegtes Anschlusselement so ausgebildet und angeordnet ist, dass es sowohl den Bereich des im Wesentlichen zylinderförmigen Balganschlussendes umgibt, als auch einen Teil der Balgwellungen. Demnach empfiehlt es sich, dass der Balg einen zentralen ringgewellten Bereich aufweist, dessen lichter Außendurchmesser im Wesentlichen dem Außendurchmesser des Anschlussendes des Solarkollektors entspricht und dass der lichte Außendurchmesser des Balgs kleiner ist als der Innendurchmesser des Anschlusselementes. Zwar weist das Anschlusselement eine gewisse axiale Mindestlänge auf, um einerseits ein Außengewinde für die Klemmringverschraubung bzw. die dabei verwendete Überwurfmutter zur Verfügung zu stellen und andererseits einen Sechskant, um das Anziehen der Überwurfmutter zu erleichtern; jedoch ist es für die Funktion des Solarkollektors und der Verschraubung nicht erforderlich, dass das Anschlusselement nur im Bereich des zylindrischen Balganschlussendes angeordnet ist. Erfindungsgemäß wird somit vorgesehen, dass sich der zentrale gewellte Bereich bis in das Anschlusselement hinein erstrecken kann, so dass sich der zentrale gewellte Bereich und das Anschlusselement in Radialrichtung überlappen; indem demgemäß das Balganschluss kürzer ausgebildet werden kann, lässt sich auch die gesamte Axiallänge der Verschraubung entsprechend reduzieren.

Um die Funktion der Klemmringverschraubung zu gewährleisten, empfiehlt es sich, wenn das Anschlussende des Solarkollektors auf seiner radialen Innenseite ein ringförmiges Stützelement aufweist, das als Widerlager für die Klemmringverschraubung dient. Zieht man die Klemmringverschraubung an, so wird die axiale Zustellbewegung der Überwurfmutter in eine radiale Kraftkomponente umgewandelt, die der Klemmring auf das Anschlussende des Solarkollektors ausübt. Um hier ein Kollabieren des Anschlussende des Solarkollektors zu vermeiden bzw. das Anschlussende entsprechend zu unterstützen, wird einfach auf der radialen Innenseite ein stabiles Stützelement vorgesehen, das ringförmig mit zylindrischem Verlauf ausgebildet sein kann oder sich beispielsweise auch mit L-förmigen Ringquerschnitt am freien Ende des Anschlussendes des Solarkollektors abstützen kann.

Was den Klemmring betrifft, so sind für diesen verschiedene Querschnittsformen denkbar. So kann der Klemmring zumindest teilweise einen kreisbogenförmigen Außenquerschnitt (bezogen auf die Axialrichtung) aufweisen oder eine wellenförmige, konische oder entgegengesetzt doppelkonische Außenform. Wichtig ist für die Funktion der Klemmringverschraubung lediglich, dass der Klemmring eine geneigt zur Axialrichtung verlaufende Führungsfläche für das Anschlusselement aufweist und dass das Anschlusselement im die Führungsfläche beaufschlagenden Bereich entsprechend angepasst ausgebildet ist.

Durch die erfindungsgemäße Ausgestaltung des Solarkollektors bzw. der Verschraubung lässt sich insgesamt eine Verschraubungsgesamtlänge von unter 75 mm und insbesondere von weniger als 65 mm und sogar bis unter 60 mm erzielen, was sich deutlich vom Stand der Technik unterscheidet und dennoch aufgrund der Verwendung eines Balgs die in der Praxis vorteilhaften Anpassungen an Längenänderungen und Montageungenauigkeiten etc. ermöglicht. Eine Verkürzung der Verschraubungsgesamtlänge führt neben einer Reduzierung des Abstands zwischen zwei benachbarten Solarmodulen auch zu einer Vergrößerung der Nettodachfläche. Bei großen Dachflächen ist es nicht unüblich, Kollektorverbände mit 500 bis 600 Solarmodulen einzubauen und es ist unschwer erkennbar, dass dort eine Reduzierung der Verschraubungslänge bereits von wenigen Millimetern dazu führt, dass man auf dem Dach in der Gesamtheit einige Solarmodule mehr anordnen und somit die Wärmeausbeute erhöhen kann.

Durch die Reduzierung der axialen Länge der Verschraubung werden aber auch die thermischen Verluste im Bereich der Verschraubung reduziert; denn weder die Verschraubungsteile noch der Balg sind in der Regel isoliert; und nachdem zwischen den Solarmodulen ein Kamineffekt mit einem starken Luftstrom entsteht, wirken die Verschraubungselemente und der Balg wie eine Art Wärmetauscher, bei dem der starke Luftstrom die Wärme des Kollektormediums teilweise abtransportiert und somit reduziert. Eine verkürzte Verschraubungslänge führt somit auch zu einer Reduzierung der Wärmeverluste.

Die vorliegende Erfindung betrifft auch eine Solarkollektoranordnung bestehend aus mehreren zueinander benachbarten Solarkollektoren gemäß zumindest Anspruch 1. Die eingangs geschilderte Aufgabenstellung trifft auch auf die Solarkollektoranordnung zu, indem eine Anordnung zur Verfügung gestellt werden soll, die sich durch einen geringeren Abstand zwischen zwei benachbarten Solarkollektoren auszeichnet. Diese Aufgabe wird erfindungsgemäß dadurch gelöst, dass die Anschlussenden der beiden zueinander benachbarten Solarkollektoren in die Balganschlussenden eingesteckt sind und dass der Balg an seinen beiden Balganschlussenden über jeweils eine Klemmringverschraubung am jeweiligen Anschlussende der zueinander benachbart angeordneten Solarkollektoren festgelegt ist.

So lässt sich erreichen, dass bei ineinandergesteckten Anschlussenden und Balg im unverschraubten Zustand der maximale axiale Platzbedarf der beiden Klemmringverschraubungen mit dem Balg weniger als 75 mm beträgt und damit deutlich weniger als bei den im Stand der Technik bekannten Anordnungen.

Die Erfindung betrifft darüber hinaus eine Anschlussverschraubung für die Verbindung zweier aneinander anzuschließender Leitungselemente von Solarkollektoren nach Anspruch 1. Um die eingangs geschilderte Aufgabenstellung zu lösen, besteht die Anschlussverschraubung aus einer Klemmringverschraubung und sind Anschlussende des Leitungselements und Balganschlussende ineinandergesteckt und durch die Klemmringverschraubung aneinander festgelegt. Hierzu weist der Balg im Wesentlichen zylindrische Balganschlussenden auf und radiale, insbesondere konische endständige Aufweitungen, ist auf der radialen Außenseite des Balganschlussendes als Teil der Klemmringverschraubung ein Anschlusselement mit Außengewinde angeordnet und ist auf das Anschlussende des Leitungselements als Teil der Klemmringverschraubung ein Klemmring mit einer Überwurfmutter aufgesteckt, so dass die Überwurfmutter mit dem ihr zugeordneten Anschlusselement verschraubbar ist.

Weitere Merkmale und Vorteile der vorliegenden Erfindung ergeben sich aus der nachfolgenden Beschreibung eines Ausführungsbeispiels anhand der Zeichnung; diese zeigt in
- Figur 1: eine teilweise geschnittene Seitenansicht einer erfindungsgemäßen Anschlussverschraubung, teilweise in Explosionsdarstellung und in
- Figur 2: eine der Darstellung in Figur 1 entsprechende Ansicht einer alternativen Anschlussverschraubung.

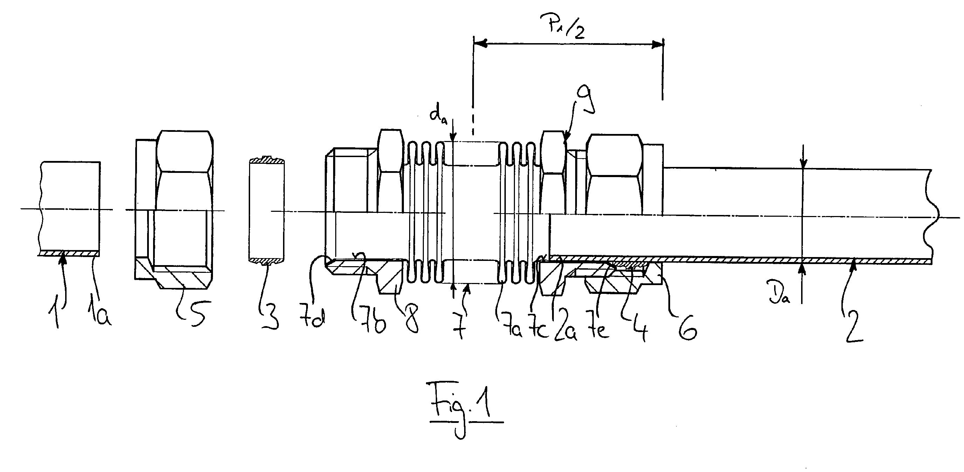

In Figur 1 ist in teilweise geschnittener Seitenansicht ein Ausschnitt einer Solarkollektoranordnung dargestellt, bei dem Leitungselemente 1, 2 von zueinander benachbart angeordneten (und in Figur 1 nicht dargestellten) Solarkollektoren miteinander fluchten und jeweils ein zylindrisches Anschlussende 1a, 2a aufweisen, das auf seiner radialen Außenseite einen Klemmring 3, 4 und eine Überwurfmutter 5, 6 trägt. Zur besseren Veranschaulichung des Aufbaus ist die rechte Verschraubung in montiertem Zustand und die linke Verschraubung in Explosionsdarstellung gezeigt.

Zwischen den beiden Anschlussenden 1, 2 ist ein Balg 7 angeordnet, der einen zentralen ringgewellten Bereich 7a und zwei zylindrische glattwandige Balganschlussenden 7b, 7c aufweist, wobei diese Anschlussenden endständige radiale konische Aufweitungen 7d, 7e aufweisen. Auf den zylindrischen Balganschlussenden 7b, 7c sind als Teil einer Klemmringverschraubung Anschlusselemente 8, 9 mit Außengewinde aufgesteckt und zwischen dem gewellten zentralen Balgbereich 7a und den konischen Aufweitungen 7d, 7e formschlüssig gehalten.

Das Montieren dieser Anschlussverbindung erfolgt nun dadurch, dass das Anschlussende 1a, 2a des Leitungselements 1, 2 in die endständige konische Aufweitung 7d, 7e des Balgs 7 eingesteckt werden, dass der Klemmring 3, 4 gegen die konische Aufweitung 7d, 7e geschoben wird und die Überwurfmutter 5, 6 in Eingriff mit dem Außengewinde der Anschlusselemente 8, 9 gebracht und angezogen wird. Im Zuge des Anziehens der Überwurfmutter drückt diese den Klemmring weiter gegen die konische Aufweitung 7d, 7e des Balg 7, wodurch der Klemmring 3, 4 sich an der konischen Aufweitung 7d, 7e abstützend in Radialrichtung nach innen auf das Anschlussende 1a, 2a gedrückt wird und dieses so reibschlüssig festlegt.

Aus Figur 1 ist unschwer ersichtlich, dass die Gesamtlänge der Verschraubungen und des Balgs sehr gering ausfällt, wobei sie im nicht angezogenen Zustand der Überwurfmuttern lediglich einen maximalen axialen Gesamtplatzbedarf P bzw. hier P₁ zwischen den voneinander abgewandten Seiten der Überwurfmuttern von 75 mm aufweisen und vorzugsweise im Bereich von nur 65 mm (in der Zeichnung Figur 1 ist wegen der auf der einen Anschlussseite vorgesehenen Explosionsdarstellung nur P₁/2 dargestellt, wobei der Aufbau symmetrisch ist und so aus der Zeichnung der Gesamtplatzbedarf direkt ableitbar ist).

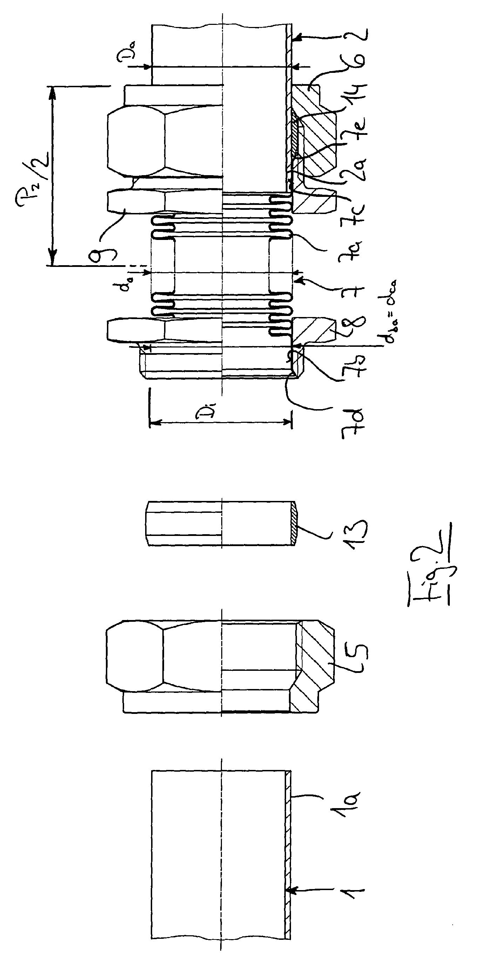

In Figur 2 sind gleiche Bauteile mit gleichen Bezugszeichen versehen. Lediglich sind statt der doppelkonischen Klemmringe 3, 4 nun etwas anders geformte doppelkonische Klemmringe 13, 14 vorgesehen. Der wesentliche Unterschied der Ausführungsform der Verschraubung gemäß Figur 2 besteht darin, dass der gewellte Bereich 7a des Balgs 7 einen lichten Außendurchmesser dₐ aufweist, der im Wesentlichen dem Außendurchmesser Dₐ des Anschlusssendes 1a, 2a des Solarkollektors entspricht. Als Bezugsgröße kann neben dem Außendurchmesser Dₐ des Anschlussendes auch der Außendurchmesser d_{ba} bzw. d_{ca} des zylindrischen Balganschlussendes 7b, 7c dienen, so dass in diesem Fall der lichte Außendurchmesser dₐ etwa dem Außendurchmesser d_{ba}, d_{ca} des Balganschlussendes 7b, 7c entsprechen würde.

In beiden Fällen heißt dies, dass der lichte Außendurchmesser dₐ kleiner ist als der lichte Innendurchmesser Dᵢ des Anschlusselementes 8, 9 und dass das Anschlusselement 8, 9 nicht nur das Balganschlussende 7c, 7b beaufschlagen kann, sondern sich auch bis über den zentralen ringgewellten Bereich 7a erstrecken kann, wodurch der maximale axiale Gesamtplatzbedarf P bzw. hier P₂ noch einmal reduziert wird auf ein Maß von 65 mm bis hin zu 60 mm (in Figur 2 ist wiederum nur P₂/2 dargestellt).

Vergleicht man die Bauformen gemäß der Figuren 1 und 2, so erkennt man, dass jedes Anschlusselement 8, 9 den Balg 7 in der Bauform gemäß Figur 2 in der axialen Länge von etwa zwei Wellen überlappt, so dass die axiale Gesamtlänge um die axiale Länge von insgesamt vier Wellen verkürzt ist, wodurch sich die reduzierte Gesamtlänge in der Größenordnung von 60 mm erreichen lässt.

Zusammenfassend bietet die vorliegende Erfindung die Möglichkeit, zwei benachbarte Solarkollektoren mit minimalen Abstand aneinander anzuordnen und anzuschließen und aber diesen Abstand auch noch für einen beweglichen Balg zu nutzen, der zum Ausgleich von Montageungenauigkeiten und von temperaturbedingten Längenänderungen dient. Erfindungswesentlich dabei ist die Tatsache, dass die Anschlussenden des Solarkollektors in die Balganschlussenden eingesteckt sind und dort über eine Klemmringverschraubung festgelegt sind.

## Patentansprüche

1. Solarkollektor mit rohr- oder schlauchförmigen Leitungselementen, die endständige und zum Anschluss an strömungsaufwärts- oder -abwärts benachbart angeordnete Leitungselemente dienende Anschlussenden aufweisen, wobei an dem Anschlussende des Solarkollektors ein Balg angeschlossen ist,
**dadurch gekennzeichnet,**
**dass** Anschlussende (1a, 2a) und Balg (7) ineinandergesteckt sind und über eine Klemmringverschraubung (3, 4, 5, 6, 8, 9) aneinander festgelegt sind.

2. Solarkollektor nach zumindest Anspruch 1,
**dadurch gekennzeichnet,**
**dass** der Balg (7) glattwandige, insbesondere zylindrische Balganschlussenden (7b, 7c) aufweist und dass auf der radialen Außenseite der Balganschlussenden als Teil der Klemmringverschraubung ein Anschlusselement (8, 9) mit Außengewinde angeordnet und über eine radiale insbesondere konische Aufweitung (7d, 7e) des freien Endes des Balganschlussendes (7b, 7c) unverlierbar gehalten ist.

3. Solarkollektor nach zumindest einem der vorstehenden Ansprüche,
**dadurch gekennzeichnet,**
**dass** auf dem Anschlussende (1a, 2a) des Solarkollektors als Teil der Klemmringverschraubung ein Klemmring (3, 4, 13, 14) und eine Überwurfmutter (5, 6) angeordnet sind.

4. Solarkollektor nach zumindest einem der vorstehenden Ansprüche,
**dadurch gekennzeichnet,**
**dass** das Anschlussende (1a, 2a) des Solarkollektors in das Balganschlussende (7b, 7c) eingesteckt ist.

5. Solarkollektor nach zumindest einem der vorstehenden Ansprüche,
**dadurch gekennzeichnet,**
**dass** der Balg (7) einen zentralen ringgewellten Bereich (7a) aufweist, dessen lichter Außendurchmesser (dₐ) im wesentlichen dem Außendurchmesser (Dₐ) des Anschlussendes (1a, 2a) des Solarkollektors und/oder dem Außendurchmesser (d_{ba}, d_{ca}) des Balganschlussendes (7b, 7c) entspricht.

6. Solarkollektor nach zumindest Anspruch 2 und Anspruch 5,
**dadurch gekennzeichnet,**
**dass** der lichte Außendurchmesser (dₐ) des Balgs (7) kleiner ist als der Innendurchmesser (Dᵢ) des Anschlusselementes (8, 9).

7. Solarkollektor nach zumindest einem der vorstehenden Ansprüche,
**dadurch gekennzeichnet,**
**dass** das Anschlussende (1a, 2a) des Solarkollektors auf seiner radialen Innenseite ein ringförmiges Stützelement aufweist.

8. Solarkollektor nach Anspruch 3,
**dadurch gekennzeichnet,**
**dass** der Klemmring (3, 4, 13, 14) zumindest teilweise einen kreisbogenförmigen Axialaußenquerschnitt oder eine wellenförmige, konische oder entgegengesetzt doppelkonische Außenform aufweist.

9. Solarkollektoranordnung bestehend aus mehreren zueinander benachbart angeordneten Solarkollektoren gemäß zumindest Anspruch 1,
**dadurch gekennzeichnet,**
**dass** die Anschlussenden (1a, 2a) der zueinander benachbarten Solarkollektoren in die Balganschlussenden (7b, 7c) eingesteckt sind und dass der Balg (7) an seinen beiden Balganschlussenden (7b, 7c) über jeweils eine Klemmringverschraubung (3, 4, 5, 6, 8, 9) an den Anschlussenden (1a, 2a) der zueinander benachbarten Solarkollektoren festgelegt ist.

10. Solarkollektoranordnung nach zumindest Anspruch 9,
**dadurch gekennzeichnet,**
**dass** bei ineinandergesteckten Anschlussenden (1a, 2a) und Balg (7) im unverschraubten Zustand der maximale axiale Platzbedarf (P) der voneinander entfernt gelegenen Teile der Klemmringverschraubung weniger als 75 mm und insbesondere weniger als 65 mm beträgt.

11. Anschlussverschraubung für die Verbindung zweier aneinander anzuschließender Leitungselemente von Solarkollektoren nach Anspruch 1,
**dadurch gekennzeichnet,**
**dass** die Anschlussverschraubung aus einer Klemmringverschraubung besteht, dass das Anschlussende (1a, 2a) des Leitungselements (1, 2) und das Balganschlussende (7b, 7c) ineinandergesteckt sind und dass das Anschlussende (1a, 2a) und das Balganschlussende (7b, 7c) durch die Klemmringverschraubung aneinander festgelegt sind.

12. Anschlussverschraubung nach zumindest Anspruch 11,
**dadurch gekennzeichnet,**
**dass** die Anschlussverschraubung aus einem Balg (7) mit im Wesentlichen zylindrischen Balganschlussende (7b, 7c) und radialer insbesondere konischer endständiger Aufweitung (7d, 7e) des freien Endes des Balganschlussendes (7b, 7c) besteht sowie aus einem auf der radialen Außenseite des Balganschlussendes (7b, 7c) angeordneten Anschlusselement (8, 9) mit Außengewinde sowie aus einem auf das Anschlussende (1a, 2a) aufgesteckten Klemmring (3, 4) mit einer Überwurfmutter (5, 6), wobei die Überwurfmutter (5, 6) mit dem ihr zugeordneten Anschlusselement (8, 9) verschraubbar ist.
